# EUROPEAN PATENT APPLICATION

(11) **EP 4 845 018 A1**
(43) Date of publication of application: **25.11.2026**
(21) Application number: 25178143.1
(22) Date of filing: 22.05.2025
(51) Int. Cl.: H02P 6/28, B25F 5/00

(54) **CURRENT MEASUREMENT AND CONTROL SIGNAL GENERATION FOR A MOTOR DRIVE**

(71) Applicant: Mirka Ltd., 66850 Jeppo (FI)
(72) Inventor: Nordström, Caj, 66850 Jeppo (FI); Westerlund, Jan-Anders, 66850 Jeppo (FI); Södergård, Tomas, 66850 Jeppo (FI)
(74) Representative: Hoffmann Eitle

(57) **Abstract**

A controller for a motor drive configured to receive a supply of current from a power supply to drive an electric motor, preferably in a powered device such as an electric power tool, the controller comprising: an input configured to obtain an analog signal indicative of a measured value, the measured value being indicative of a current supplied to the electric motor; an integrator configured to obtain an accumulated value of a difference between the measured value and the reference value over time; a comparator configured to compare the accumulated value with a reference range; and a signal generator configured to generate at least one control signal, wherein, when the accumulated value is equal to or higher than an upper limit of the reference range, the signal generator is configured to cause the at least one control signal to indicate a first value for interrupting the supply of current, and when the accumulated value is lower than or equal to a lower limit of the reference range, the signal generator is configured to cause the at least one control signal to indicate a second value for causing a restart in the supply of current. A motor drive comprising the controller and a powered device are also provided.

## Description

### Technical field

The present invention relates to the control of a motor drive for an electric motor and in particular, to a controller, a motor drive and a powered device.

### Background

Powered devices comprise electric motors to perform various operations. These electric motors are electronically controlled using a motor drive which comprises an electrical circuit to control the electrical current provided to the windings (or each phase windings) of the electric motor. In known techniques, a current in the circuit is sampled and compared to a reference value to obtain an error which is then used in a Pulse-Width Modulation (PWM) to generate a signal for controlling the motor drive.

Typically, the current is sampled once per PWM cycle, which requires multiple PWM cycles to obtain an estimate and adjust the current to match the reference value, and is thus slow and inaccurate.

### Summary

There is a need for an improved current control loop for a motor drive.

The inventors identified a method of improving the measurement of current whilst simplifying the circuit required to provide the current control.

According to a first example aspect herein, there is provided a controller for a motor drive configured to receive a supply of current from a power supply to drive an electric motor, preferably in an electric power tool, the controller comprising:
an input configured to obtain an analog signal indicative of a measured value, the measured value being indicative of a current supplied to the electric motor;
an integrator configured to obtain an accumulated value of a difference between the measured value and a reference value over time;
a comparator configured to compare the accumulated value with a reference range; and
a signal generator configured to generate at least one control signal,
wherein, when the accumulated value is equal to or higher than an upper limit of the reference range, the signal generator is configured to cause the at least one control signal to indicate a first value for interrupting the supply of current, and
when the accumulated value is lower than or equal to a lower limit of the reference range, the signal generator is configured to cause the at least one control signal to indicate a second value for causing a restart in the supply of current.

The inventors identified that an analog signal can be used to obtain the measured value continuously and adjust the current to the reference value within a switching cycle, thus improving the response time of the system.

This allows the rectification of the error to be made without needing various processes required by PWM-based control or the like, such as measuring a maximum current value, filtering the current signal or using a peak detector to estimate the current, all of which need a plurality of cycles to obtain an estimate. This also avoids the need for the components that would be necessary for the PWM-based control, such as a signal generator to obtain the fixed frequency carrier signal (typically a sawtooth signal), the comparator between the carrier signal and the error value, etc. As the present invention does not require a fixed-frequency carrier signal in the generation of the signals for controlling the motor drive, it obviates the need to synchronize a frequency at which a measured value is sampled with such fixed-frequency carrier signal.

Accordingly, this leads to a simpler control loop providing an improved measurement.

The power supply can be any element supplying power from a power source. The source may be in the powered device (for example a battery) or external to the powered device (for example a grid such as a mains power supply). The power supply may be providing an AC or DC power, which may be based on a rectification of an AC power and/or a transformation of a DC power from a source.

The controller may be used to control a motor drive in a powered device, i.e. any device that can be powered to operate with electric power, in particular AC electric power.

Preferably, the powered device may be an electric power tool (e.g. a sander, a drill, a saw), a dust extractor, etc. The powered device may be of any suitable form, such as a portable (e.g. hand-held) device, a mountable device that can be mounted (or otherwise fixed, temporarily or permanently) on a workstation or a wall, a device having both portable and mounted components, etc.

As mentioned above, the controller, the motor drive and the motor are preferably for a powered device, and more preferably for an electric power tool, and may be provided in the powered device/electric power tool.

The motor (or electric motor) may be any suitable type of motor such as a universal motor, a DC motor (e.g. brushed/brushless DC motor), an induction machine with a variable-frequency drive, etc., which may have one or more phase windings.

The motor drive comprises an electric circuit to controllably supply the electric power from the power supply to the motor, and specifically to control the current supplied to the phase windings of the motor (or each phase winding of a multi-phase motor). To control the supply of electric power, the motor drive comprises a number of electronic elements (e.g. switching elements) that are controlled to selectively allow current to flow to the phase windings of the motor. The number of switching elements may correspond for example to the number of phases of the motor.

As used herein, the term analog signal is used to indicate a continuous signal, as opposed to a signal having discrete values (digital signal).

A value may be measured (i.e. the "measured value") in the electrical circuit comprising the motor drive and the motor, in order to obtain an indication of a current supplied to the electric motor. This is preferably a voltage or a current value.

Preferably, the input of the controller is couplable to at least one sensor (e.g. current or voltage sensor) for measuring an electrical quantity (e.g. current or voltage) at a location of the electric circuit.

Preferably, the input is configured to receive the analog signal indicating at least one of a current value and a voltage value. The coupled sensor(s) may be located at any location of the electric circuit, such as a node that is located at an input or an output of the motor drive, or a node internal to the motor drive circuit, and the sensor(s) may measure a corresponding electrical quantity which indicates the current that is input into the motor drive or the current that is output from the motor drive. It would be understood that many various configuration to obtain a measured value indicative of a current supplied to the electric motor may be used, and the measured value may result from the measurement from more than one element (for example, currents in various phases may be combined to obtain a total current). It would be understood that generally, any measurable electric quantity that is indicative of a current supplied to the electric motor may be used as the measured value. For example, a sensor may measure a change in a magnetic field that is indicative of a corresponding change in a current flowing through the circuit at a specific location.

In other words, the measured value may be on the power-supply side (i.e. between the power supply and the motor drive, which can also be referred to as an input, input terminal, or upstream of the motor drive, as the electric power flows from the power supply towards the motor), on the motor-side of the motor drive (i.e. between the motor drive and the electric motor, also referred to as an output, an output terminal, or downstream of the motor drive) or in the motor drive itself.

Preferably, the measured value is a current or voltage value that corresponds to an amplitude of the current supplied to the motor.

Preferably, the measured value is proportional to the amplitude of the current supplied to the motor.

In other words, the measured value is an electric quantity (as opposed, for example, to a mechanical quantity such as the rotational speed) which has a direct correspondence/proportionality to the current supplied to the motor.

The expression "current supplied to the electric motor" indicates that it is possible to establish (determine/calculate) based on the measured value, the current that is supplied to one or more phases of the motor via the motor drive, substantially at the instant where the value was measured.

The integrator obtains the difference between the measured value (i.e. the analog signal) and the reference value and sums the difference that is obtained at successive time instants, to obtain the accumulated value. The integrator may obtain the difference in various ways, for example by receiving it as an input, by receiving the measured value and the reference values as separate inputs and calculating the difference, or by retrieving (e.g. in the case of a digital integrator) a value indicative of the difference that is stored in a memory location.

Preferably, the difference between the measured value and the reference value is obtained as an analog (continuous) signal. This allows the integrator to obtain an accumulated value by integrating the (continuous) difference over time. As the integrator may, in some cases, perform an addition of (i.e. sum) instantaneous values of the difference to obtain a cumulative value (as the accumulated value), it may be referred to as an accumulator as well.

Because the accumulated value depends on the difference between the measured value and the reference value, the accumulated value increases when the measured value is higher than the reference value, and it decreases when the measured value is lower than the reference value, or vice-versa, depending on whether the difference is calculated as (measured value - reference value) or (reference value - measured value). For simplicity, the following uses the example where the difference is calculated as the measured value - the reference value. However, it would be understood that the opposite formula for the difference may be used instead.

Thus, by comparing the accumulated value to the upper limit of the reference range, it is possible to avoid that the measured value remains higher than the reference value for too long (or is too high relative to the reference value) which may cause a noticeable difference in how the motor operates relative to the desired operation. Similarly, the comparison to the lower limit ensure the measured value does not remain lower than the reference value for too long, or at a value that is too low relative to the reference value.

The reference range may be defined by a lower limit and/or an upper limit (e.g. a minimum and maximum value, respectively), or it may be defined by one value (e.g. one of the lower and upper limits, or an intermediate value) and a range above/below or around the value, and may also be referred to as a reference window.

It would be understood that the signal generator is configured to generate the at least one control signal based on a result of the comparison between the accumulated value and the reference range.

The generated control signals may control a state of at least one switching element (e.g. a transistor) in the motor drive, thus controlling which phase of the electric motor is supplied with electric power.

Each signal generated by the signal generator may be voltage signals applied directly to one or more switching elements (e.g. to a gate terminal of the/each switching element) to control the state of the switching element(s). Alternatively, it may be a digital signal indicating one of the first value or second value (e.g. as a binary value) transmitted to a voltage signal generator coupled to, but external to the controller. In such case, the voltage signal generator receiving either the first value and the second value translates this into a voltage signal having a corresponding voltage level (i.e. a voltage level corresponding to the first value or the second value, such as a relatively high voltage value or a relatively low voltage value) to either turn ON or OFF the switching element(s). If a separate voltage signal generator is present, it would merely translate the received first value or second value into a corresponding voltage level without needing to perform any comparison or other process that would be typically required for example in a PWM signal generator.

It would be understood that, when the supply of current is interrupted because of the control signal(s) indicating the first value, the measured value would decrease over time (and may become substantially zero). This would cause the measured value to become lower than the reference value, which would cause the difference to be negative, causing in turn the accumulated value to decrease.

On the other hand, when the supply of current is restarted because of the control signal(s) indicating the second value, the measured value would increase, eventually becoming higher than the reference value. This causes the difference to become positive, causing in turn the accumulated value to increase.

Accordingly, controlling of the supply of current based on the accumulated value allows the measured value to remain around the reference value.

Preferably, the input is configured to receive information indicating the reference value.

The information indicating a reference value may include the reference value itself, or it may include one of a plurality of indices each having a predetermined association with a respective reference value (e.g. the indices 'i0', 'i1' and 'i2' may be associated with the values v1, v2 and v3, respectively, and the information may indicate one of these indices).

Preferably, the controller obtains the reference value autonomously. For example, the reference value may be a value saved in a memory accessible to the controller, or the controller may determine the reference value autonomously (i.e. without receiving any information relating to the reference value from another entity).

Preferably, the signal generator is configured to cause the at least one control signal to switch from indicating the first value to the second value when the accumulated value crosses the upper limit of the reference range (i.e. exceeds/becomes higher than), and to remain in a state indicating the first value until the accumulated value crosses (i.e. becomes lower than) a lower limit of the reference range.

Preferably, the signal generator is configured to cause the at least one control signal to switch from indicating the second value to the first value when the accumulated value crosses the lower limit of the reference range, and to remain in a state indicating the second value (thus allowing the supply of current to continue) until the accumulated value becomes higher than the upper limit of the reference range.

Preferably, the signal generator is configured to cause the at least one control signal to indicate the first value for interrupting the supply of current only when the accumulated value crosses the upper limit of the reference range (i.e. the accumulated value becomes higher than the upper limit of the reference range).

Preferably, the signal generator is configured to cause the at least one control signal to indicate the second value for restarting the supply of current only when the accumulated value crosses the lower limit of the reference range (i.e. the accumulated value becomes lower than the upper limit of the reference range).

In other words, the signal generator controls the at least one control signal to cause the accumulated value to return within the reference range whenever it leaves the range (i.e. crosses one of the limit to falls below or becomes higher than).

In some embodiments, the controller may be implemented using hardware components, and in particular the controller may be implemented using only analog electronic components (such as resistors, operational amplifiers, capacitors, etc.).

In some embodiments, the controller may comprise at least one element using a digital signal as an input and/or an output. In some embodiments, the controller may comprise a combination of software and hardware, for example where analog signals are digitized and processed by software module(s). In such cases, the control signal(s) output by the controller may be digital signal(s) (e.g. output to a separate analog voltage signal generator coupled to the switching elements of the motor drive), or analog signals obtained based on a digital signal.

Preferably, the comparator is configured to determine the reference range based on the reference value.

Preferably, the input is configured to receive information indicating the reference range.

Accordingly, the controller can obtain a reference range that is determined outside the controller and control the motor drive and the motor accordingly. For example, another controller in the powered device may determine the reference range based on a desired operation of the electric motor etc., and provide this reference range to the controller for a suitable control of the motor drive and the electric motor.

The information indicating the reference value and the information indicating the reference range may be received together or separately.

Preferably, the input is configured to receive a reference analog signal indicating the reference value.

For example, the input may comprise a terminal at which the reference analog signal is received, and the controller (or an element thereof, such as the input or the integrator) is configured to obtain the difference between the analog signal indicative of the measured value and the reference analog signal.

Preferably, the input is configured to receive the information indicating a reference range as a second analog signal.

Accordingly, the second analog signal can be processed by electric elements in the controller (e.g. resistors, operating amplifiers, etc.) without requiring any conversion to/from a digital signal.

Preferably, the integrator is configured to obtain a third analog signal indicating the difference between the measured value and the reference value.

Accordingly, the accumulated value can be obtained based on the third analog signal, for example by integrating it or by summing values sampled from the third analog signal.

Preferably, a size of the reference range is determined based on the reference value.

As the accumulated value is based on deviations of the measured value relative to the reference value, this allows the control to be adaptive to difference reference values, to consider the deviation in proportion to the absolute value of the reference value (e.g. a deviation of 0.1mV would be more significant for a reference value of 20mV than a reference value of 1V).

Preferably, the size of the reference range is based on an amplitude of the reference value. For example, a predetermined correspondence between the amplitude of the reference value and the size of the reference range may be used by the controller to calculate the size of the reference range.

The size of the reference range may have a predetermined relationship to the amplitude of the reference value (for example, a proportional relationship, linear relationship, etc.). Accordingly, this allows reference range to be made wider for larger reference values (and thus larger measured value), and vice-versa.

This in turn allows the frequency at which the accumulated value crosses one of the limits of the reference range, which in turn controls a frequency at which the control signal(s) generated by the signal generator switch between indicating the first value and the second value, and thus the frequency at which the elements in the motor drive switch.

It would be understood that, unlike a PWM-based control using a fixed-frequency carrier signal, the accumulated value may cross one of the limits of the reference range at a rate that varies (i.e. not a fixed frequency). As such, the control signal(s) need not switch at a fixed frequency either.

Preferably, the controller is configured to determine the size of the reference range based on at least one of: an amplitude of a current related to the reference value and an amplitude of a voltage related to the reference value, preferably the size of the reference range being proportional to the at least one of the amplitude of the current related to the reference value and the amplitude of the voltage related to the reference value.

An amplitude defined as "related to the reference value" may be an amplitude that corresponds to (e.g. equal or proportional to) an amplitude of the reference value, or it may be an amplitude derivable from an amplitude of the reference value, for example if the reference value is for a current on the motor-side of the motor drive, but the reference range is made proportional to an amplitude of a current on the power supply-side of the motor drive: the two are related since the current on the motor-side depends on the amplitude of the current on the power supply-side.

As explained above, determining (or adjusting) the size of the reference range based on the amplitude of the current and/or the voltage related to the reference value allows the frequency at which the control signal(s) generated by the signal generator switch between indicating the first value and the second value.

Preferably, the controller is configured to determine the size of the reference range based on at least one of the amplitude of the current related to the reference value or the voltage related to the reference value, an amplitude of the voltage supplied by the power supply, a nominal voltage of the motor, an inductance value at an output of the motor drive, and an inductance value of the motor.

In other words, the size of the reference range is based on electrical quantities at the input of the motor drive and at the output of the motor drive.

Using the above coefficient was found by the inventors to allow the frequency at which the switching elements in the motor drive switch (i.e. a switching frequency) to be more precisely controlled. This switching frequency may therefore be controlled regardless of the (amplitude of) the reference value, for example to be maintained at or around a substantially constant value.

This is because, when the current is being supplied to the motor, the rate of change of the output of the integrator would depend on these electrical characteristics of the circuit, any of which may be predetermined based on an intended use of the controller. Depending on the characteristics of the circuit in which the controller will be used, a subset of these characteristics may have a stronger influence on adjusting the size of the reference range to maintain the rate at which the switching elements are switched relatively constant, such that not all of the above characteristics may need to be taken into account.

Preferably, the size of the reference range is determined based on a formula a · Ref_value · (Vin - Vnm), where a is a real number greater than zero, Ref_value is the amplitude of the current related to the reference value or the voltage related to the reference value, Vin is an amplitude of the voltage supplied by the power supply and Vnm is a nominal voltage of the motor.

Preferably, the controller is configured to adjust a size of the reference range.

This may be a reference range determined based on information received via the input of the controller, or a reference range determined by the controller itself.

The adjustment may be based on a measured frequency at which the control signal(s) switch between indicating the first value and the second value (for example by estimating this frequency based on a past period), and/or based on a desired level of accuracy for the control of the motor (for example, a lower level of accuracy may use a wider reference range to reduce switching losses in the motor drive, whereas a higher level of accuracy may require a narrower reference range).

Preferably, the controller is configured to obtain a switching frequency at which the at least one control signal switches between indicating the first value and indicating the second value, and to adjust the size of the reference range so that the switching frequency matches substantially a reference frequency.

For example, the controller may be configured to increase the size of the reference range if the switching frequency is higher than the reference frequency, and/or to decrease the size of the refence range if the switching frequency is lower than the reference frequency.

The switching frequency of the at least one control signal need not be a constant frequency (as it depends on when the accumulated value crosses one of the limits of the reference range), but it may be estimated based on a past period (for example the past 10 milliseconds) as a rolling average.

The output of the signal generator over one or more past periods may be processed to estimate a rate at which the control signal switches (i.e. the switching frequency). A switching frequency that is higher than the reference frequency indicates that the accumulated value crosses the reference range (below or above) too often. Accordingly, the controller can adjust the reference range by widening it (i.e. increasing its size). On the other hand, if the switching frequency is lower than the reference frequency, the reference range can be determined to be too wide, and the controller can adjust it by decreasing its size (i.e. narrowing it).

The "match substantially" can be understood to mean that the switching frequency falls within a range around the reference frequency, for example having a difference of ±5% (or any other range around the reference frequency), which may be a predetermined range (for example based on an accuracy of the measurement). In some cases, the measured switching frequency could be considered to still substantially match even if it temporarily falls outside the range as long as it remains within the range for at least a given proportion of the time (e.g. 90% of the time), to take into account measurement errors, or other spikes due to commutation, etc.

The reference frequency could be a predetermined frequency or it can be determined dynamically, for example based on the desired operation of the motor drive.

The adjustment of the size may be done by a predetermined value, or the increase/decrease may be a based on a difference between the switching frequency and the reference frequency (the higher the difference, the higher the change in size of the reference range).

Controlling the switching frequency allows the switching losses to be controlled.

Preferably, the measured value is the current that is received by the motor drive from the power supply.

In other words, this is the value of (e.g. the amplitude) of the current received at an input terminal of the motor drive, which will be selectively provided to one or more phases of the motor.

Accordingly, a single measured value can be used even in case of a multi-phase motor, thus simplifying the circuit. Additionally, measuring the current on the power-supply side allows for a calculation of the power taken from the power supply (e.g. a mains power supply) to be easily derived as the voltage may be known in advance.

Preferably, the measured value is obtained from a low-voltage side input of the motor drive.

Accordingly, the measured value is not based on a floating voltage or current value, and thus the measurement can be simplified.

Preferably, the at least one control signal is for controlling a state of one or more switching elements in the motor drive.

Preferably, the signal generator is configured to generate a respective control signal for each of a number of phases of the motor, wherein each control signal is for controlling a state of a respective switching element corresponding to one of the phases of the motor.

Preferably, the signal generator is configured to generate one control signal for controlling a state of a switching element of the motor drive that corresponds to a plurality of phases of the motor. Preferably, the switching element of the motor drive that corresponds to a plurality of phases of the motor is located on a bus of the motor drive to which the plurality of phases of the motor are connected, such as one of a high-voltage side input and a low-voltage side input of the motor drive. Preferably, the bus of the motor drive corresponds to a low-voltage side input of the motor drive.

Accordingly, a single control signal may be used to control whether the motor is supplied with current, even if the motor comprises a plurality of phase windings (in which case, this may be combined with a commutation control determining which of the phase windings should be supplied with current at any given time instant).

Preferably, the motor comprises a plurality of phases supplied with current in sequence according to a commutation sequence, and the at least one control signal is combined with an output of a commutation indicator, the output of the commutation indicator indicating which of the plurality of phases should be supplied with current.

Preferably, the commutation indicator is configured to receive an indication of a rotational angle of the motor, preferable a rotor angle, and to generate the output based on the rotational angle.

Preferably, the controller comprises the commutation indicator.

Preferably, at least one of the input, the integrator, the comparator and the signal generator comprises respective analog circuit elements.

Preferably, all of the input, the integrator, the comparator and the signal generator comprises respective analog circuit elements.

Preferably, the integrator comprises an operational amplifier in an integrator amplifier configuration, the operational amplifier of the integrator being configured to receive at its negative input a signal indicative of the difference between the measured value and the reference value.

Preferably, the comparator comprises an operational amplifier in a comparator amplifier configuration, the operational amplifier of the comparator being configured to receive at its first input a signal indicative of a limit of the reference range, and at its second input a signal corresponding to the accumulated value. The first input corresponds to one of the positive input and the negative input, and the second input corresponds to the other one.

Preferably, the first input of the operational amplifier of the comparator is connected to a ground via a switch, wherein a state of the switch is controlled by the output of the operational amplifier of the comparator.

Accordingly, when the accumulated value has crossed the upper limit of the reference range, the signal at the first input of the operational signal becomes indicative of the lower limit of the reference range (which will be the next one crossed), and vice-versa.

Preferably, the controller further comprises an analog-to-digital, A/D, converter configured to sample the analog signal (indicative of the measured value), or another analog signal that is indicative of the difference between the measured value and the reference value, wherein the A/D converter is configured to generate a digital signal based on the sampled signal, and the integrator is configured to obtain the accumulated value based on the digital signal.

Preferably, the other analog signal corresponds to the difference between the measured value and the reference value.

The A/D converter may be located between the input and the integrator, and in particular between an element of the controller calculating the difference and the integrator.

Samples of the analog signal may be provided to digital or software components (e.g. processing means such as a microcontroller), used in at least a part of the control process described herein, namely obtaining the reference value, obtaining the difference between the measured value and the reference value, accumulating/integrating the difference, obtaining the reference range, comparing the accumulated value with the reference range and/or generating control signal(s).

As the disclosed control process does not require a comparison to a high-frequency carrier signal, as would be the case in PWM-based control or the like, the risk of errors in the estimation from the sampling (such as any aliasing effect) is reduced.

An implementation comprising software components may provide higher flexibility, in particular regarding the determination of the reference value and/or the reference range, when compared to a fully-hardware implementation.

Preferably, the controller further comprises an analog-to-digital, A/D, converter configured to sample a signal indicative of the accumulated value that is output by the integrator, wherein the A/D converter is configured to generate a digital signal based on the sampled signal, and the comparator is configured to compare the digital value with the reference range.

With this implementation, the difference and the accumulated value may be determined as analog signals, whilst allowing a digital comparator to be used, which may be easier to adapt to changes in the reference range. This also allows the elements of the controller other than the element obtaining the difference and the integrator to be implemented on one or more processing devices, for example a microcontroller having processor(s).

Preferably, the A/D converter is configured to sample at a sampling frequency that is at least an integer multiple of a switching frequency at which the switching elements in the motor drive are determined to be switching.

This sampling frequency may be used for an A/D converter sampling the analog signal (or an analog signal indicative of the difference), or an A/D converter sampling the signal indicative of the accumulated value output by the integrator. The switching frequency may be determined based on the control signal(s) generated by the signal generator, or by sensing the state of the switching elements in the motor drive.

Accordingly, the accumulated value can be calculated sufficiently frequently. As the sampling frequency would be at least twice (the smallest possible integer multiple) the switching frequency, changes in the measured value would be detectable from the samples obtained by the A/D converter. However, it would be understood that the sampling frequency need not to be an exact integer (e.g. a sampling frequency of 100kHz for a switching frequency of 33kHz would be possible, or a sampling frequency of 150kHz for a switching frequency of around 40kHz).

Preferably, the electric motor comprises a plurality of phases, and wherein the signal generator is configured to output respective at least one control signal for each phase of the electric motor.

In such cases, there may be an additional control indicating a sequence which of the phases windings should be provided with current supply, also referred to as a commutation sequence, which may be based on an alignment between the rotor and the stator of the motor, a desired operational characteristic (e.g. speed, torque) for the motor, etc.

Preferably, at least one of the integrator, comparator and input of the controller is configured to operate repeatedly, more preferably at a respective rate or continuously.

When the integrator repeatedly or continuously obtains the accumulated value, each new obtained accumulated value may be based on at least one value of the difference that was not taken into account in earlier obtained accumulated values. The comparator may, at each comparison with the reference range, use the latest obtained accumulated value.

According to a second example aspect herein, there is provided a motor drive comprising the controller according to the first example aspect herein, and a switching circuit comprising at least one switching elements, wherein the output of the switching circuit is connectable to an electric motor, wherein the motor drive is configured to control a state of the at least one switching elements based on the at least one control signal, to drive the electric motor.

Preferably, the motor drive is for a powered device, and more preferably for an electric power tool. A tool may provide more than one of these functions.

According to a third example aspect herein, there is provided a powered device comprising the motor drive according to the second example aspect herein and the electric motor, wherein the motor drive is coupled to a power supply.

Preferably, the power supply comprises a coupling to an external power source, such as a mains power supply, and/or to an internal power source, such as a battery.

The term "external" or "internal" should be understood to be relative to the powered device. In other words, the powered device may comprise a power source (internal) or may be coupled to a power source (external).

In some cases, the power supply may control whether power is obtained from the external power source or from the internal power source. The power supply may also be configured to charge the internal power source (e.g. in the case of a rechargeable battery) using power from the external power source.

Preferably, the powered device is a portable device, more preferably a hand-held device, or a mountable device.

Preferably, the powered device may be mountable on a workstation or a wall.

Preferably, the powered device, such as the portable/hand-held or mountable device, is an electric power tool.

Preferably, the electric power tool is at least one of an electric sander, a drill, a saw, and a dust extractor.

According to a fourth example aspect herein, there is provided a method for controlling a motor drive configured to receive a supply of current from a power supply to drive an electric motor, preferably in an electric power tool, the controller comprising:
obtaining an analog signal indicative of a measured value, the measured value being indicative of a current supplied to the electric motor;
obtaining an accumulated value of a difference between the measured value and a reference value over time;
comparing the accumulated value with a reference range; and
generating at least one control signal,
wherein, when the accumulated value is equal to or higher than an upper limit of the reference range, the generated at least one control signal indicates a first value for interrupting the supply of current, and
when the accumulated value is lower than or equal to a lower limit of the reference range, the at least one control signal indicates a second value for causing a restart in the supply of current.

According to a fifth example aspect herein, there is provided a computer program comprising instructions which, when the instructions are executed by one or more processor, cause the one or more processor to carry out a method according to the fourth example aspect herein.

According to a sixth example aspect herein, there is provided a computer-readable medium, (preferably a non-transitory computer-readable medium) storing the computer program according to the fifth example aspect herein.

### Brief description of the drawings

Embodiments of the present invention, which are presented for better understanding the inventive concepts, but which are not to be seen as limiting the invention, will now be described with reference to the figures in which:
Figure 1 shows a schematic diagram illustrating an example of a controller, a motor drive and a motor in example embodiments;
Figure 2 shows a schematic diagram illustrating a more detailed example of a controller in example embodiments;
Figures 3A and 3B show schematic diagrams illustrating the current flow in the motor drive and the motor when the supply of current from a power supply is restarted/enabled, and when the supply of current is interrupted, respectively;
Figure 4 shows a schematic diagram illustrating a specific example of a controller using an analog circuit in example embodiments;
Figures 5A and 5B show schematic diagrams illustrating examples of connections between the controller and the motor drive in example embodiments;
Figures 6A shows a schematic diagram illustrating a simulated example of an electrical circuit comprising the controller shown on Figure 4, a motor drive and a motor;
Figures 6B and 6C show waveforms of electrical quantities of the simulated electrical circuit shown on Figure 6A;
Figures 7A and 7B show schematic diagrams illustrating two specific examples of a controller using at least one digital circuit component in example embodiments;
Figure 8 shows operations performed for controlling a motor drive in example implementations;
Figure 9 shows a schematic diagram illustrating an example of a processing device that may be used to implement the controller in example embodiments; and
Figure 10 shows a schematic diagram illustrating a modification of the controller using at least one digital circuit component in example embodiments.

### Detailed description

Although example embodiments will be described below, it will be evident that various modifications may be made to these example embodiments without departing from the broader spirit and scope of the invention. Accordingly, the following description and the accompanying drawings are to be regarded as illustrative rather than restrictive.

In the following description and in the accompanying figures, numerous details are set forth in order to provide an understanding of various example embodiments. However, it will be evident to those skilled in the art that embodiments may be practiced without these details.

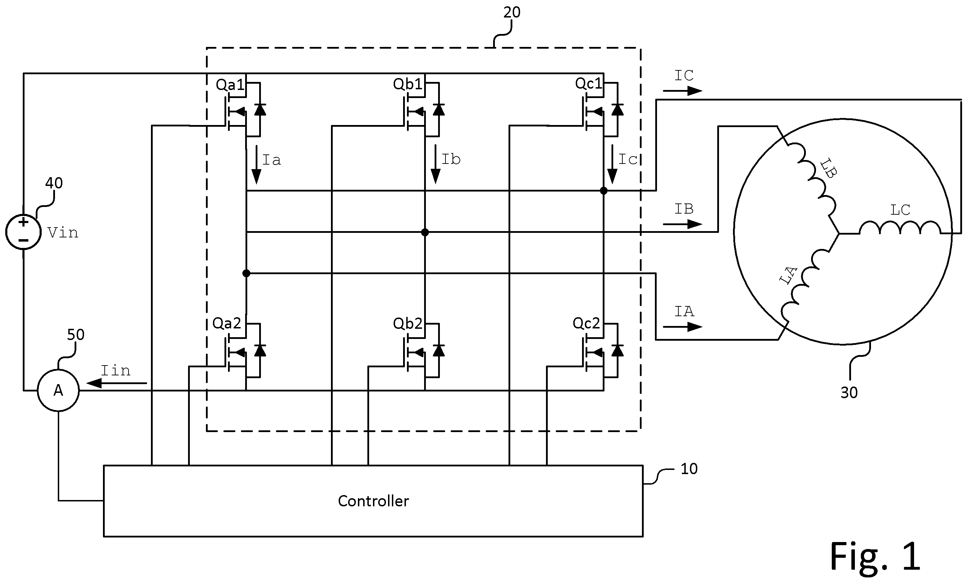

Figure 1 shows an example of a controller 10 connected to a motor drive 20 which uses electric power from a power supply 40 to drive an electric motor 30.

The controller 10, motor drive 20 and the motor 30 may be comprised in a powered device (not shown).

The powered device may be, for example, an electric sanding machine, an electric grinding machine or a dust extractor (or an electric sanding/grinding machine with an embedded dust extractor). However, it would be understood that the present invention is not limited in this aspect, and the powered device may be any other suitable type of device disclosed herein or that would be apparent to the skilled person based on the present disclosure, in particular, it may be any suitable type of power tools.

The power supply 40 may be coupled to a DC or AC power source (not shown), and may comprise elements for transforming the received power into a DC power of having a voltage Vin, for example using an half-wave or full-wave inverter to rectify a received AC power and/or a transformer to modify the voltage/current level of a DC power.

The power source may be in the powered device (e.g. in the form of a battery, fuel cell, etc.) or it may be electrically coupled but external to the powered device (e.g. in the form of an external battery, a mains power supply or other grid).

In the example of Figure 1, the motor 30 is a BLDC motor with three phase windings LA, LB, LC, and the motor drive 20 comprises pairs of switching elements (e.g. MOSFETs) to controllably apply a voltage from the power supply 40 is applied across phase windings of the motor 30.

However, it would be understood that the type of motor, the number of phase windings and the configuration of the motor drive 20 is merely a non-limiting example. In particular, the motor may have one phase, or any other number of phases (which may be connected according to a Wye-configuration as shown on Figure 1, a Delta-configuration, etc.). The motor may be a universal motor, a DC motor, a brushless DC motor, an induction machine with a variable-frequency drive, etc.

The motor drive 20 may comprise any number of switching element. In the example of Figure 1, the motor drive comprises a pair of switching elements for each phase of the motor, namely a first pair Qa1 and Qa2, a second pair Qb1 and Qb2, and a third pair Qc1 and Qc3. In these pairs, the switching elements Qa1, Qb1 and Qc1 may be referred to as the high-side or positive-side elements as they are connected to a positive terminal of the power supply 40, whereas the switching elements Qa2, Qb2 and Qc2 may be referred to as the low-side or negative side elements as they are connected to a negative terminal of the power supply 40.

Each switching element may be any type of switchable element for example a transistor, such as Field-effect transistor (FET) (e.g. Si MOSFET, GaN MOSFET, SiC MOSFET, etc.), Bipolar junction transistor (BJT), insulated-gate bipolar transistor (IGBT), thyristor, or other known types of switches.

The controller 10 is coupled to a current sensor 50 configured to measure a current lin flowing from the power supply 40. The current lin is supplied to the motor drive 20 which in turns supplies the current to the motor 30. In other words, the current lin is a measured value being indicative of the current supplied to the electric motor, i.e. the current indicated as IA, IB and/or IC on Figure 1. The current sensor 50 generates an analog signal indicative of the current lin, which is provided to the controller 10.

Based on the analog signal, the controller 10 generates one or more control signals to control the motor drive 20, and specifically the state of the switching elements in the motor drive to control how the current from the power supply 40 is supplied to each phase winding of the motor 30, as will be explained in more detail in the following.

Although not shown on Figure 1, in some cases additional elements may be present in the circuit between the power supply 40 and the motor drive 20, such as a power module, a boost converter, etc. A particular example of the circuit from the power supply to the motor may be found in the co-pending application titled "A motor drive with integrated PFC", the disclosure of which is herein incorporated by reference in its entirety.

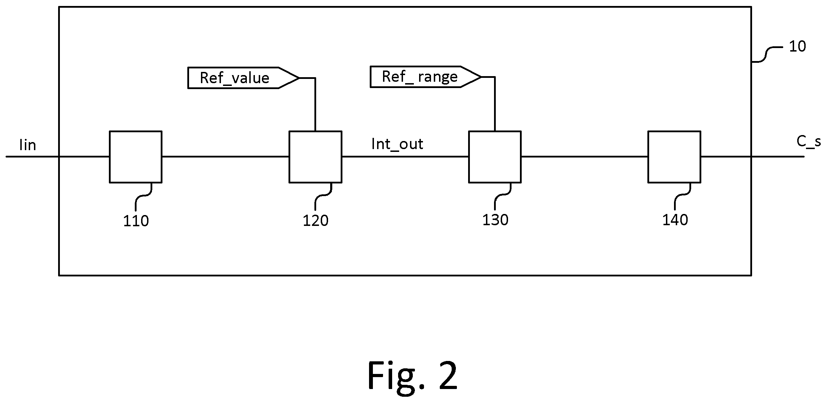

Referring now to Figure 2, a more detailed example of the controller 10 will now be described.

The controller 10 comprises an input 110, an integrator 120, a comparator 130 and a signal generator 140.

The input 110 is configured to receive an analog signal indicative of a measured value (in this example, lin, the electric current supplied by the power supply). As explained above, lin is indicative of the current IA, IB or IC to be supplied to the electric motor.

The integrator 120 obtains, based on this measured value and a reference value Ref_value, an accumulated value Int_out of a difference between the measured value lin and the reference value Ref_value over time.

For example, the integrator 120 may obtain a value of the difference over time (i.e. at successive time instants) and, depending on whether the value of the difference is obtained as a continuous curve over time or at discrete time instants, the integrator may obtain an integral of the difference or a sum of the difference value at the discrete time instants.

The comparator 130 is configured to compare the accumulated value Int_out that is obtained by the integrator 120 and compare this to a reference range Ref_range.

The reference range may be indicated as a single value indicating an absolute allowable limit for the accumulated value Int_out. For example, a single value of 2.0 may indicate that the accumulated value Int_out is allowed to be a maximum of 2.0 (indicating the measured value lin is higher than the reference value Ref_value) or a minimum of -2.0 (indicating the measured value lin is lower than the reference value Ref_value). Alternatively, the reference range may be indicated as two separate values, one for a maximum allowable value and one for a minimum allowable value.

The reference value Ref_value and the reference range Ref_range may be provided to the controller 10 by an external entity (i.e. external to the controller 10) or it/they may be determined by the controller 10 itself, for example as value(s) that the controller 10 calculates autonomously or retrieves from a memory coupled to or integral to the controller 10. The comparator 130 outputs the result of the comparison as an indication of whether the accumulated value has crossed a limit of the reference range.

The signal generator 140 obtains the result of the comparison from the comparator 130. Depending on the result of the comparison, the signal generator 140 generates a control signal C_s. The control signal C_s is for controlling whether the current from the power supply is supplied to the motor or not. The generated control signal C_s indicates one of two values: a first value one allowing the current supplied (or restarting the supply of current if it has been interrupted) and one interrupting the current supplied (and preventing the current from being supplied).

The control signal may be an analog signal using a first voltage level to indicate the first value and a second voltage level (different from the first) to indicate the second value (e.g. 0V for the first value and 1.5V for the second value). As shown on Figure 1, such analog signal can be applied to a gate terminal of a switching element in the motor drive. In other cases, the control signal may be a digital signal indicating (e.g. using one bit) either the first value or the second value (e.g. as a logical '1'/TRUE for the first value and a logical '0'/FALSE for the second value, or vice versa).

Although the example of Figure 2 shows one control signal C_s being generated, it would be understood that a plurality of control signals may be generated instead. In particular, in some cases, the number of control signals generated may correspond to the number of phase windings of the motor or to the number of switching elements in the motor drive.

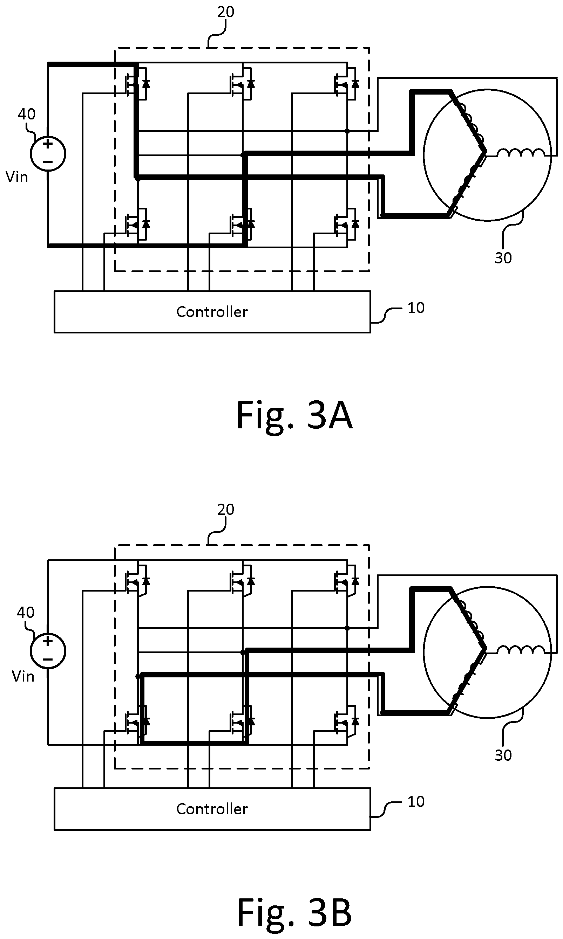

Referring now to Figures 3A and 3B, the cases where the generated control signal(s) indicate the first value and the second value, respectively, will be described.

In the case of Figure 3A, the control signal(s) indicate the first value, meaning the current from the power supply 40 flows through a switching element of the motor drive 20, through the phase windings of the motor 30, and back through another switching element of the motor drive 20 to the power supply 40. This also causes the inductance of the phase windings of the motor to accumulate charges over time.

On the other hand, in the case of Figure 3B, the control signal(s) indicate the first value, meaning the current from the power supply 40 is interrupted and not supplied to the motor 30. The charges in the phase windings cause a current to flow, forming a loop with two switching elements of the motor drive 20.

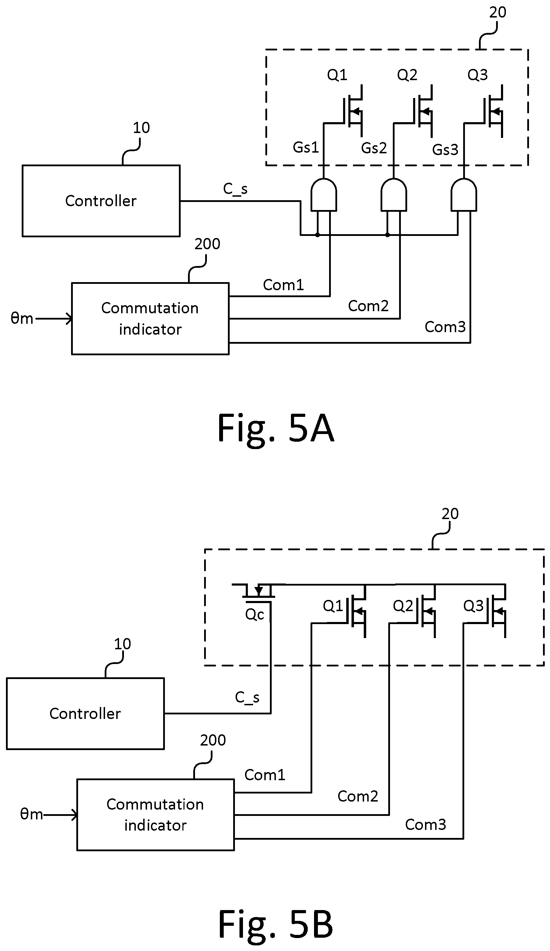

The cases shown on Figures 3A and 3B show the current flowing through specific windings of the motor. However, it would be understood that the phase windings through which the current flows at any given time would be determined based on a commutation sequence that is based on the configuration of the motor (geometric parameters such as the number of phase windings, number of rotor poles, the angle between adjacent rotor poles, the number of pole pairs of the motor etc.), a desired operation of the motor, such as an angle of rotation of the motor, the desired speed, etc. Further details relating to the commutation of the phase windings of a multi-phased motor will be described with reference to Figure 5A below, although details that would become apparent to the skilled person will be omitted for brevity.

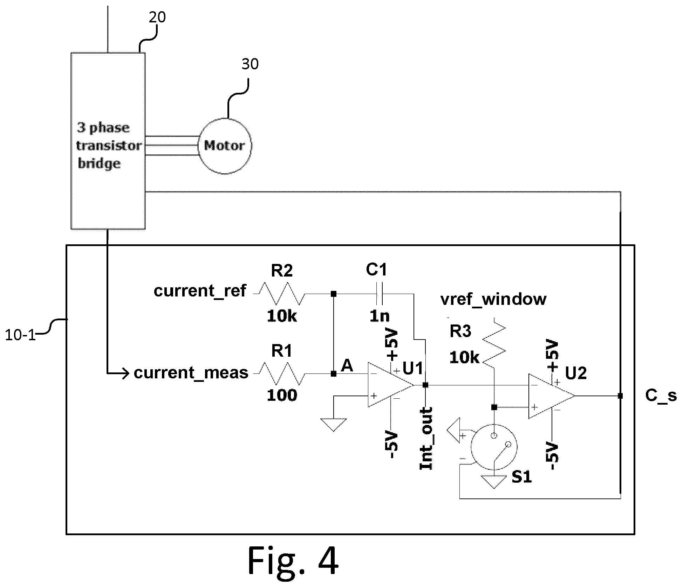

Referring now to Figure 4, a specific example of the controller 10 of Figure 2 using an analog circuit will now be described. Specifically, in the example of Figure 4, each of the input, integrator, comparator and signal generator comprise analog circuit element(s).

The controller 10-1 shown on Figure 4 only comprises analog circuit elements, and thus does not require any digital element (or conversion of analog to digital or vice-versa) to generate the control signal C_s.

The controller 10-1 comprises an input node (current_meas) connected to a location of the motor drive 20 where the value indicative of the current supplied to the motor is measured (i.e. the "measured value") and providing a voltage indicative of the measured value.

The input node A is connected to a node A via a second resistor R1.

In the example of Figure 4, the resistor R1 has a resistance value of 100Ω.

The node A is also connected to a voltage corresponding to a reference value (current_ref) via a second resistor R2 (having a resistance of 10kΩ in the example of Figure 4). Accordingly, the voltage at the node A is indicative of a difference between the measured value and the reference value.

The node A is also connected to a negative input of a first operational amplifier U1 which is set in an integrator circuit configuration, namely with a positive input connected to the ground, and a capacitor C1 (1nF in the example of Figure 4) connecting the negative input to the output of the first operational amplifier U1.

Accordingly, the voltage V(Int_out) at the output of the first operational amplifier U1 corresponds to an integral of the voltage at its negative input (i.e. the difference between the measured value and the reference value).

The output of the first operational amplifier U1 is connected to a negative input of a second operational amplifier U2 in a comparator configuration, i.e. comparing the signals at its two inputs. The positive input of the second operational amplifier U2 is connected to a voltage indicative of a limit of the reference range vref_window, via a third resistor R3 (having a resistance of 10kΩ in the example of Figure 4). The positive input of the second operational amplifier U2 is also connected to the ground via a switch S1, initially in an open state. The output of the second operational amplifier U2 is connected to the switch to control whether the switches toggles from an open to close state or vice-versa.

Accordingly, the signal at the negative input of the comparator's operational amplifier initially indicates an upper limit of the reference range. The output of the second operational amplifier U2 depends on which of its input is higher: when the accumulated value V(Int_out) becomes higher than this upper limit, the output of the second operational amplifier U2 changes.

This causes the state of the switch S1 to change to a closed state. As a result, the signal at the negative input of the second operational amplifier U2 decreases to becomes indicative a lower limit of the reference range. Thus, the second operational amplifier U2 begins to compare the accumulated value with the lower limit of the reference range, which is the next limit that will be crossed by the accumulated value.

In the example of Figure 4, the signal at the output of the second operational amplifier U2 can be used as the control signal C_s used to control the supply of current to the motor as well.

In other words, in the example of Figure 4, at least the input node (current_meas) may correspond to an input of the controller 10-1, at least the first operational amplifier U1 and the capacitor C1 may correspond to an integrator of the controller 10-1, at least the second operational amplifier U2 may correspond to a comparator of the controller 10-1 and the output of the second operational amplifier U2 may correspond to a signal generator of the controller 10-1.

It would be understood that the configuration of the elements in the circuit shown on Figure 4 may vary. In particular, the resistance and capacitance values described above may be different, for example they be determined based on the parameters of the power supply, the motor drive, the motor etc.

By way of a non-limiting alternative example, the configuration of the comparator may be changed so that the accumulated value is connected to a positive input of the second operational amplifier U2 instead (whilst the signal indicative of the limit of the reference range is connected to the negative input of the second operational amplifier U2), and the following values for the passive elements may be used: R1= 220Ω, R2= 5kΩ, R3= 1kΩ, C1= 2.2nF. Additional elements may be included, such as a resistance (e.g. 330Ω) between the positive input of U1 and the ground, a resistance (e.g. 1kΩ) between the output of U1 and the input of U2, etc.). In other cases, one or more of the resistances R1, R2 and R3 may be omitted.

It would also be understood that the connections of the signals indicating the reference range and the accumulated value with the inputs of the second operational amplifier U2 may be inverted.

Referring now to Figures 5A and 5B, different examples of how the control signal(s) generated by the controller 10 may be applied to the motor drive will now be described, in particular in case the motor comprises a plurality of phases. It would be understood that, although Figures 5A and 5B exemplify the case of a motor with three phases, the motor may have any number of phases (including one phase), as the invention is not limited in this particular aspect. For simplicity, Figures 5A and 5B show only one switching element for each phase of the motor. The switching element illustrated on Figures 5A and 5B may be either one a pair of switching elements with one connected on a high-voltage input side of the motor drive and another connected on a low-voltage input side of the motor drive. In other words, the switching elements Q1, Q2 and Q3 on Figure 5A or Figure 5B may correspond either to the switching elements Qa1, Qb1 and Qc1 on Figure 1 or the switching elements Qa2, Qb2 and Qc2 on Figure 1.

When controlling motors having multiple phase windings, the phase windings are powered (i.e. supplied with current from the power supply) in sequence, each during a respective commutation period. The sequence in which the phase windings are powered depends on characteristics of the motor, such as the number of rotor and stator poles of the motor, the configuration of the windings, etc.

In this case, a commutation indicator 200 may obtain information about a rotational angle θm related to the motor 30 (e.g. a rotor angle) and generate an output indicating which of the phase windings should be supplied with current according to the commutation sequence. The rotational angle may be determined based on a sensor (e.g. as Hall sensors placed on the rotor) or by measuring the produced Back EMF, which also allows the commutation indicator to determine when to change the phase winding(s) being powered. For brevity, further details on the commutation sequence of phase windings of a motor and the determination of which phase windings should be powered during a current commutation period that will become apparent to the skilled person are not described here.

In the example shown on Figure 5A, the commutation indicator 200 generates the output as separate signals Com1, Com2 and Com3, each corresponding to one of the phases of the motor. Specifically, the commutation indicator 200 outputs signals that enable the switching element corresponding to the phase(s) to be powered at a time instant to be turned on (i.e. forming an electric path for the current) and that disable switching elements corresponding to other phases from being turned on. For example, if the phase corresponding to the switching element Q1 is to be powered, the signal Com1 may correspond to a logical high value whilst the signals Com2 and Com3 may correspond to a logical low value.

The signals generated by the commutation indicator 200 may be combined with the control signal C_s generated by the controller 10, such that a switching element is only turned ON if both the control signal C_s indicates the current from the power supply should be supplied to the motor (i.e. as long as the accumulated value has not exceeded the upper limit of the reference range) and the corresponding signal from the commutation indicator 200 indicates that the phase should be powered.

On Figure 5A, this is shown using AND gates. Specifically, the combination of the control signal C_s with the signal Com1 generated by the commutation indicator 200 for a first phase forms the signal Gs1 controlling whether the switching element Q1 corresponding to the first phase is turned ON, the combination of the control signal C_s with the signal Com2 generated by the commutation indicator 200 for a second phase forms the signal Gs2 controlling whether the switching element Q2 corresponding to the second phase is turned ON, and the combination of the control signal C_s with the signal Com3 generated by the commutation indicator 200 for a third phase forms the signal Gs3 controlling whether the switching element Q3 corresponding to the third phase is turned ON.

It would be understood that the reference to AND gates is meant as a non-limiting illustrative example, as any suitable equivalent circuit may be used instead, for example using a multiplexer, with the commutation indicator 200 generating one signal to indicate which of the switching elements should be supplied with the control signal C_s, the other remaining disabled, etc.

The motor drive 20 may comprise for each phase of the motor, another switching element. Those other switching elements may be controlled accordingly whilst avoiding both switching elements in a pair to be ON (to avoid a short circuit) using any suitable method. Various methods to control the second switching element of a pair may be used, for example a symmetric/synchronous control (whereby at any given time, exactly one of the switching elements in the pair is ON and the other is OFF), an asymmetric control (whereby the first switching element switches ON and OFF during a commutation period whilst the second switching element in the pair remains always OFF during the commutation period), or a semi-symmetric switching as described in the application PCT/EP2018/065972 (published as WO 2019/238243), the disclosure of which is herein incorporated by reference in its entirety.

In some cases, the controller 10 may comprise the commutation indicator 200, and thus generate a plurality of control signals corresponding to the signals Gs1, Gs2 and Gs3 on Figure 5A.

Referring now to Figure 5B, another example of applying the control signal C_s to the motor drive.

In the example of Figure 5B, a single control signal C_s is generated by the controller 10. The control signal C_s controls whether a switching element Qc that is located on an input side of the motor drive is turned ON or OFF. The switching element Qc controls the supply of current from the power supply to any of the phases of the motor, and thus may be referred to as a switching element common to the plurality of phases of the motor. In the example shown on Figure 5B, the switching elements Q1, Q2 and Q3 may be connected to respective phases of the motor 30 as shown on Figure 1, for example. The common switching element Qc may be coupled to any node that is common to the plurality of phases. Such common switching element Qc allows for the supply of current to be controlled by controlling the state of only a single switching element. It would be understood that a plurality of common switching elements Qc may be provided, for example a plurality of switching elements in parallel with each other whilst being controlled by a same signal C_s (thus reducing the current flowing through each common switching element). The switching element Qc may be provided on the positive input side of the motor drive 20 (i.e. the side connected to the positive electrode of the power supply 40), or to the negative input side of the motor drive 20 (i.e. the side connected to the negative electrode of the power supply 40).

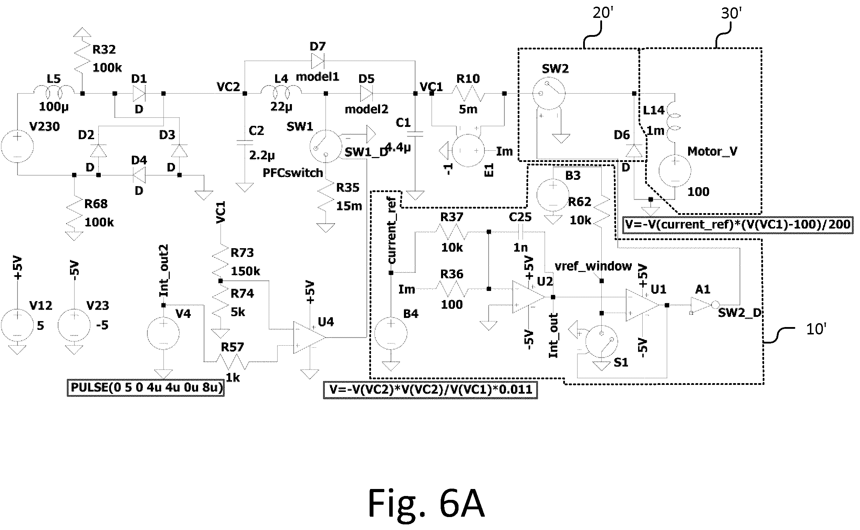

Referring now to Figures 6A to 6C, a simulation using the controller shown on Figure 4 will be described.

Figure 6A shows a set-up used for the simulation, and in particular, a circuit 10' to simulate the circuit 10-1 of Figure 4 including the simulated voltage sources to provide the reference values, a circuit 20' comprising a switch SW2 and a diode D6 to simulate the motor drive 20, and a circuit 30' with an inductor L14 and a simulated voltage source Motor_V to simulate the motor 30.

For simplicity, the simulation of Figures 6A to 6C is simulating only a single phase of the motor drive and the motor. However, this simulation can be generalized to a motor having any number of phases.

In the example of Figure 6A, the measured current, indicated as Im, is measured as a voltage across a resistor R10 at a high-voltage input side of the motor drive.

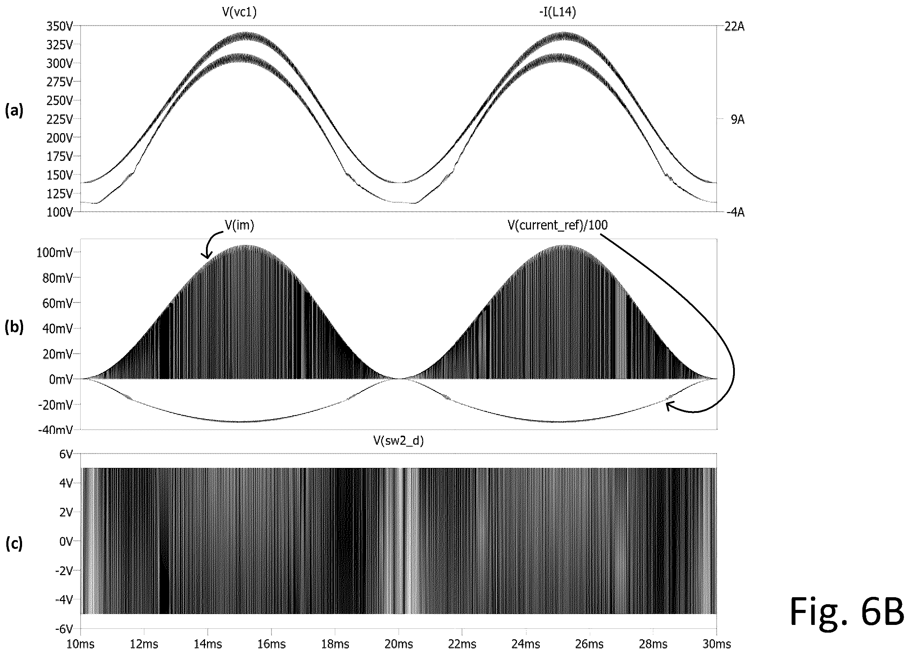

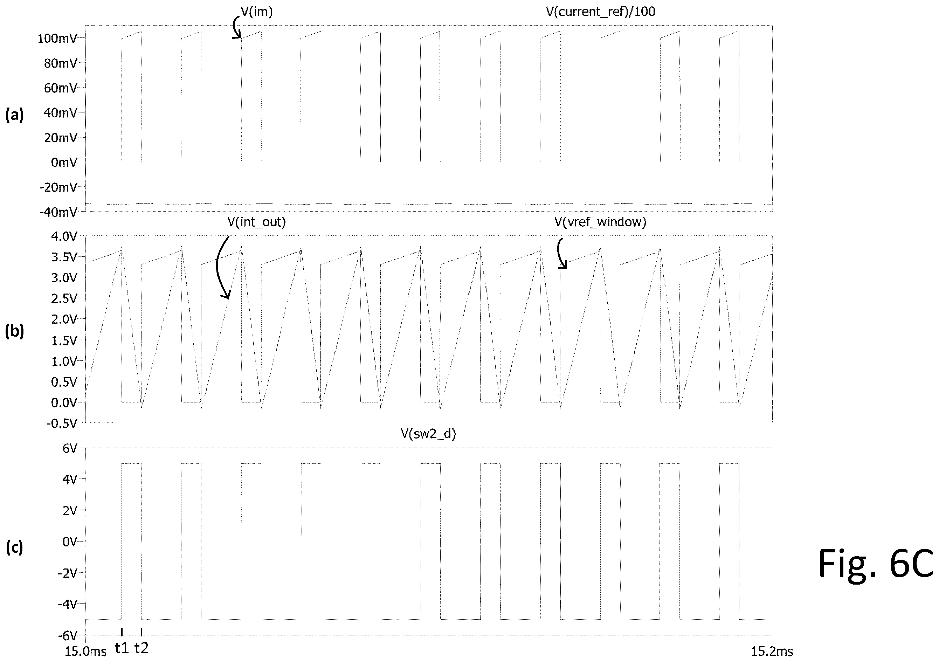

Figure 6A also shows a rectifier (with the diodes D1, D2, D3 and D4) and a boost converter (with the capacitors C1 and D2, the diode D5 and D7, the inductor L4 and the switch SW1). This circuit is a particular implementation used as an illustrative example of the operation of the controller. Further details on the control of the boost converter and the rest of the circuit may be found in the co-pending application titled "A motor drive with integrated PFC", the disclosure of which is herein incorporated by reference in its entirety. However, the circuit on the input side of the motor drive 20 is not limited to this illustrative example. For example, the power supply 40 may be a DC power supply providing a voltage level that is sufficiently high for the specific application such that both the rectifier and the boost converter may be omitted (or may be replaced by other components). Figure 6B shows waveforms of electrical quantities of a simulation of the controller, the motor drive and the motor over a 20 millisecond period (10ms to 30ms), and Figure 6C shows waveforms of electrical quantities over a shorter period of 0.2ms (from 15ms to 15.2ms).

Figure 6B(a) shows the input voltage V(vc1), which corresponds to power supply 40 shown on Figures 1, 3A and 3B, and the current across the motor winding I(L14).

Figure 6B(b) shows the measured current V(im) and the reference value V(current_ref) ). The reference value V(current_ref) is connected to the input of the first operational amplifier (U2 on Figure 6A, corresponding to U1 on Figure 4) via a 10kΩ resistor R37, and the measured current V(im) is connected to the input of the first operational amplifier via a 100Ω resistor R36. Accordingly, Figure 6B(b) shows the value V(current_ref) normalized based on the ratio of the resistor values (i.e. 10kΩ/100Ω). Additionally, the sign of the two waveforms shown on Figure 6B(b) are opposite as the signal at the input of the first operational amplifier is indicative of a difference between the measured value and the reference value. Nevertheless, Figure 6B(b) shows that the waveform of the measured value V(im) follows the shape of the waveform of the reference value V(current_ref), their respective amplitude increasing and decreasing together. In the present example, the reference range around the reference value, within which the measured value V(im) is allowed to vary, has a size that varies together (e.g. has a proportional relationship) with the amplitude of the reference value V(current_ref), thus avoiding a change in the frequency at which the control signal(s) generated by the controller switch. In other words, the size of the reference range increases as the amplitude of the reference value increases, and the size the reference range decreases as the amplitude of the reference value decreases

Figure 6B(c) shows the signal V(sw2_d) controlling the state of the switch SW2, which corresponds to the signal C_s on Figure 4, 5A or 5B.

Referring now to Figure 6C, waveforms of electrical quantities during the shorter period will now be described.

Figure 6C(a) shows the same waveforms as those on Figure 6(b), namely the measured current V(im) and the reference value V(current_ref)/100.

Figure 6C(b) shows the waveforms of the two signals compared by the second operational amplifier, namely the accumulated value V(int_out) output by the first operational amplifier and the reference range (vref_window). In the example of Figure 6C(b), signal V(vref_window) is controlled to alternately take a value corresponding to the upper limit of the reference range (around 3.5V on the example of Figure 6C(b)) and a value corresponding to the lower limit of the reference range (0V on the example of Figure 6C(b)).

Figure 6C(c) shows the signal V(sw2_d) output by the second operational amplifier, namely the control signal (C_s on Figure 4). When V(sw2_d) is 0, the switch SW2 is in an open state, so no current flows (i.e. V(im) = 0).

At time instant t=15ms, the switch SW2 is open (V(sw2_d) is at 0V), V(im) is at 0mV and the reference value V(current_ref)/100 is around -34mV. As V(im) and V(current_ref) are connected to the inverting input of the first operational amplifier, this causes the output V(int_out) to increase at a constant rate, while V(int_out) remains below V(vref_window) representing the upper limit of the reference range.

At time instant t=t1, V(int_out) becomes greater than V(vref_window). This causes the output of the second operational amplifier to switch, i.e. V(sw2_d) becomes 5V, closing the switch SW2. Current can flow through the motor windings, and V(im) becomes a value around 100mV. At the same time, V(vref_window) is switched to the value of 0V corresponding to the lower limit of the reference range.

As V(current_ref)/100 remains around -34mV, having a higher V(im) causes the V(in_out) to start decreasing at a constant rate, while V(int_out) remains above V(vref_window) representing the lower limit of the reference range.

At time instant t=t2, V(int_out) becomes lower than V(vref_window). This causes the ou output of the second operational amplifier to switch, i.e. V(sw2_d) becomes 0V, opening the switch SW2 and thus interrupting the current (V(im) returns to 0mV, and switching V(vref_window) to switch to the value (3.5V) representing the upper limit of the reference range.

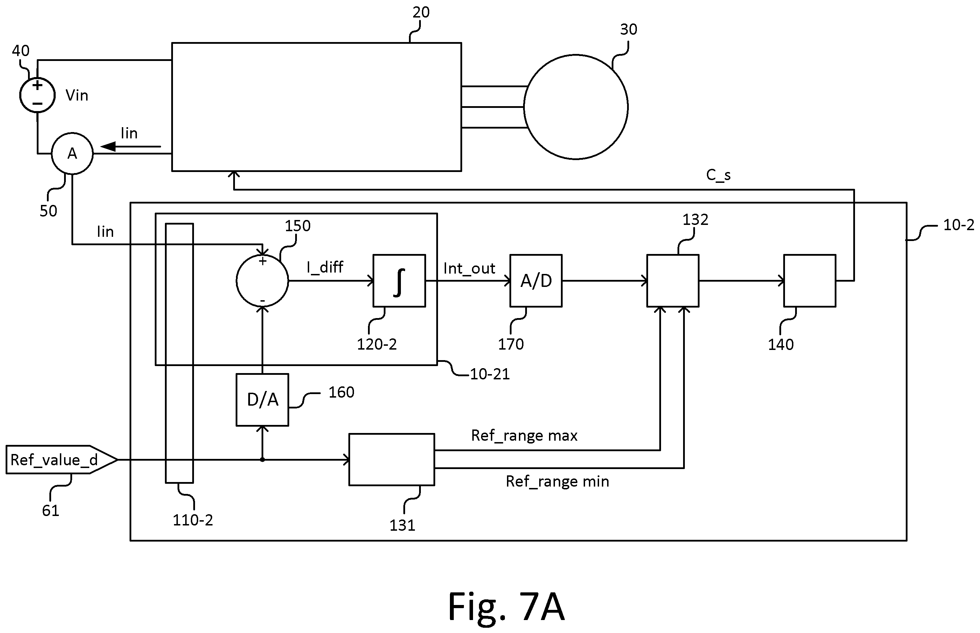

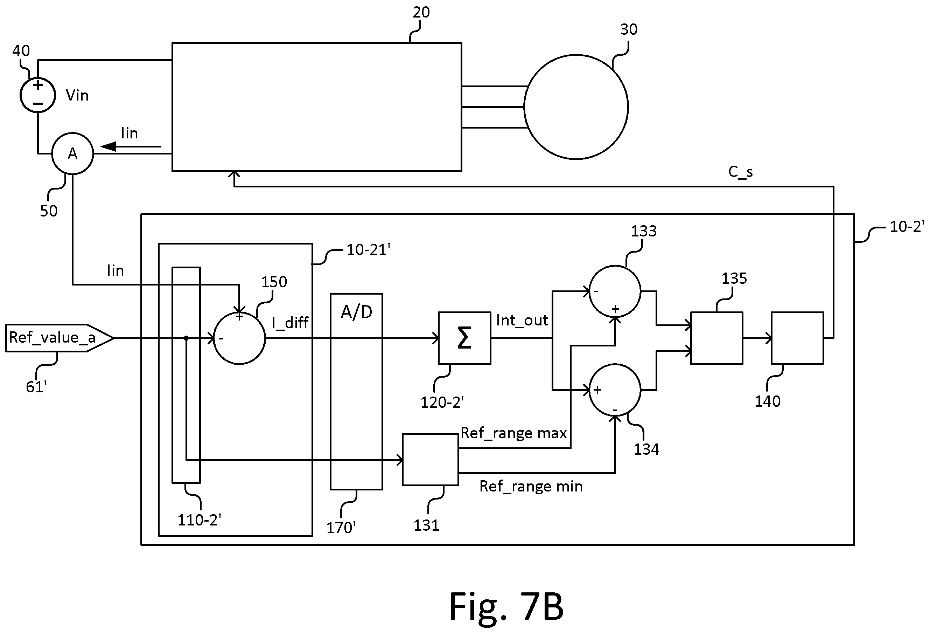

Referring now to Figures 7A and 7B, specific examples of the controller 10 of Figure 2 using at least one digital circuit component will now be described.

In Figure 7A, the controller 10-2 comprises an input 110-2, a first difference calculator 150, a digital-to-analog (D/A) converter 160, an analog-to-digital (A/D) converter 170, an analog integrator 120-2, a reference range determinator 131, a comparator 132, and a signal generator 140.

The input 110-2 is configured to receive an analog signal lin indicative of a measured value, and information 61 indicating the reference value Ref_value_d. In the example shown on Figure 7A, the information indicating the reference value is received in a digital form (e.g. a digital signal). However, as explained below with reference to Figure 7B, the information may be instead received as an analog signal, or the controller 10-2 may determine the reference value itself (and if necessary, generate a corresponding analog signal).

The input 110-2 provides the analog signal indicative of a measured value to the first difference calculator 150. The reference value is provided to the D/A converter 160 which generates an analog signal that is provided to the first difference calculator 150.

The first difference calculator 150 obtains an analog signal I_diff corresponding to the difference between the measured value and the analog signal corresponding to reference value. The analog signal I_diff is provided to the analog integrator 120-2 which generates an integrated analog signal Int_out, which is provided to the A/D converter 170.

The A/D converter 170 samples the analog signal Int_out at a sampling frequency and outputs the sampled values to the comparator 132.

The reference range determinator 131 determines the reference range based on the reference value. Specifically, in the example of Figure 7A, the reference range determinator 131 determines the size WS of the reference range based on the reference value Ref_value_d, for example by multiplying Ref_value_d by a coefficient a, where a is a real number greater than 0, i.e. WS = a · Ref_value_d (in which case, the size WS is proportional to the reference value).

For example, the coefficient a may be determined based on a predetermined size of the reference range to be used when the reference value has a predetermined value (e.g. 1A). The coefficient a then allows the size WS to be adjusted based on the actual reference value, that is, to have a larger reference window when the reference value is larger than the predetermined value and a smaller reference window when the reference value is smaller than the predetermined value.

The reference range determinator 131 then determines and outputs an upper limit Ref_range max and a lower limit Ref_range min of the determined reference range, to the comparator 132.

For example, the reference range may be determined as extending equally above and below a predetermined value (e.g. 0), or by determining one of the limits as a predetermined value (e.g. the lower limit as 0) and determining the other limit to obtain the desired size.

The comparator 132 receives the sampled values output by the A/D converter 170, the upper limit Ref_range max and the lower limit Ref_range min of the reference range. The comparator 132 determines if the sampled values falls within the reference range. If the accumulated value does not fall within the range, it outputs an indication to the signal generator to switch the state of the control signal(s), for example from a logical high to a logical low, or vice-versa.

The signal generator 140 generates at least one analog signal as the control signal(s) to control the state of switching element(s) in the motor drive 20.

Upon receiving an indication that the control signals should switch state from the comparator 132, the signal generator 140 causes the control signal(s) to switch from indicating one of the first value and the second value, to indicate the other one of the first value and the second value. Thus, after the switch, the output control signal(s) either cause the supply of current through the motor drive to be interrupted (in case of a switch from the second value to the first value) or to be restarted (in case of a switch from the first value to the second value).

In the example of the controller 10-2 shown on Figure 7A, the first difference calculator 150, the analog integrator 120_2 and the part of the input 110-2 relating to the measured value lin define an analog part 10-21. On the other hand, the reference range determinator 131, the comparator 132 and the part of the input 110-2 relating to the reference value Ref_value_d operate on digitized information, and may be implemented as software modules executed by one or more processor (for example on one or more microcontrollers), as one or more hardware modules, or as a combination of hardware and software modules.

Referring now to Figure 7B, a variation 10-2' of the controller shown on Figure 7A will now be described. The following description will focus on the parts of the controller 10-2' that differ from the controller 10-2.

Different from the controller 10-2, the controller 10-2' comprises an input 110-2', an A/D converter 170', a digital accumulator 120-2', a second difference calculator 133, a third difference calculator 134 and a combiner 135. For brevity, the three elements that are the same in the controller 10-2' and the controller 10-2, namely the first difference calculator 150, the reference range determinator 131 and the signal generator 140, and their respective operation will not be repeated below.

In the example of Figure 7B, the input 110-2' receives a first analog signal lin indicative of the measured value, and a second analog signal 61' indicative of the reference value Ref_value_a. The input 110-2' provides these signals to the first difference calculator 150, and the second analog signal 61' to the A/D converter 170'.

The first difference calculator 150 outputs the analog signal I_diff, as explained with reference to Figure 7A above, to the A/D converter 170'.

The A/D converter 170' samples the analog signal I_diff and outputs sampled values to the digital accumulator 120-2'. The A/D converter 170' also samples the second analog signal 61' and outputs sampled value to the reference range determinator 131. The A/D converter 170' need not sample the two signals at the same frequency, and the A/D converter 170' may comprise a two A/D converting modules, one for each analog signal.

The reference range determinator 131 receiving the sampled values indicative of the reference value outputs the upper limit Ref_range max and the lower limit Ref_range min of the determined reference range, as explained with reference to Figure 7A above.

The accumulator 120-2' obtains a sum of the sampled values to obtain the accumulated value Int_out. The accumulator 120-2' may, for example, store in memory a calculated accumulated value, and update the accumulated value whenever a new sampled value is output by the A/D converter 170'. As the accumulator 120-2' receives sampled values, it can be defined as a digital integrator.

The second difference calculator 133 obtains the accumulated value Int_out from the accumulator 120-2' and the upper limit of the reference range Ref_range max from the reference range determinator 131. The second difference calculator 133 calculates a difference (Ref_range max - Int_out) between the upper limit of the reference range and the accumulated value. A negative difference indicates the accumulated value is higher than the upper limit of the reference range, and a positive difference indicates the accumulated value is lower than to the upper limit of the reference range (or equal to, if the difference is zero).

Similarly, the third difference calculator 134 obtains the accumulated value Int_out from the accumulator 120-2' and the lower limit of the reference range Ref_range min from the reference range determinator 131. The third difference calculator 134 calculates a difference (Int_out - Ref_range min) between the accumulated value and the lower limit of the reference range. A positive difference indicates the accumulated value is higher than the lower limit of the reference range (or equal to, if the difference is zero), and a negative difference indicates the accumulated value is lower than the lower limit of the reference range.

The combiner 135 obtains the respective difference calculated by each of the second difference calculator 133 and the third difference calculator 134. If both differences are positive, the accumulated value is within the reference range, meaning no change to the control signal is necessary.

On the other hand, if either difference has a negative, it indicates that the accumulated value crossed a limit of the reference range. Accordingly, the combiner 135 is configured to output a signal to the signal generator indicating a state of the control signal C_s should switch, when one of the differences becomes negative.

It would be understood that the reference range determinator 131, the second difference calculator 133, the third difference calculator 134 and the combiner 135 can be considered to form together a comparator of the controller 10-2.

As explained in connection with Figure 7A, a part of the controller 10-2 forms an analog part 10-21', namely the input 110-2' and the first difference calculator 150, whereas the reference range determinator 131, the accumulator 120-2', the second and third difference calculators 133, 134 and the combiner 135 operate on digitized information, and may be implemented as software modules executed by one or more processor (for example on one or more microcontrollers), as one or more hardware modules, or as a combination of hardware and software modules.

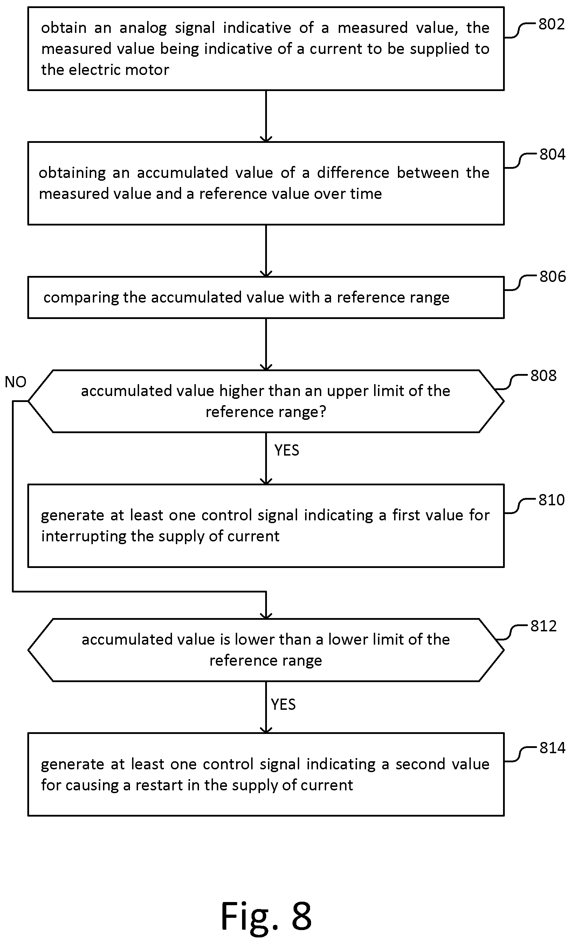

In summary, it will be appreciated from the description above that certain example embodiments perform processing operations to effect a method as shown in Figure 8 that is for controlling a motor drive configured to receive a supply of current from a power supply to drive an electric motor, where the motor drive, power supply and motor may be in an electric power tool.

At step 802, an analog signal indicative of a measured value is obtained. The measured value is indicative of a current supplied to the electric motor.

At step 804, an accumulated value of a difference between the measured value and a reference value over time is obtained.

At step 806, the accumulated value is compared to a reference range.

At step 808, it is determined whether the accumulated value is higher than an upper limit of the reference range. If the accumulated value is determined to be higher than the upper limit (YES at step 808) processing proceeds to step 810, where at least one control signal indicating a first value for interrupting the supply of current is generated.

If on the other hand the accumulated value is not higher than the upper limit (NO at step 808), processing skips step 810 to step 812 instead.

At step 812, it is determined whether the accumulated value is lower than an upper limit of the reference range. If the accumulated value is determined to be lower than the lower limit (YES at step 812) processing proceeds to step 814, where at least one control signal indicating a second value for restarting the supply of current is generated.

If on the other hand the accumulated value is not lower than the lower limit (NO at step 812), processing skips step 814.

It would be understood that any of the steps shown on Figure 8 can be performed separately and/or independently of each other. Although these operations are shown on Figure 8 to occur in a specific order, this is a non-limiting example. For example, the determination at step 812 may be performed before or in parallel to the determination at step 808, with at most one of the two determinations leading to the generation of control signal(s) due to the mutually exclusive nature of these determinations.

Each of these operations may be performed in parallel, and each may be performed continuously or repeatedly (e.g. periodically) at a same rate or each having a separate rate of repetition. For example, processing after step 810 and/or 814 may return to step 802 or any other point earlier in the process. Any of these operations may be performed continuously.

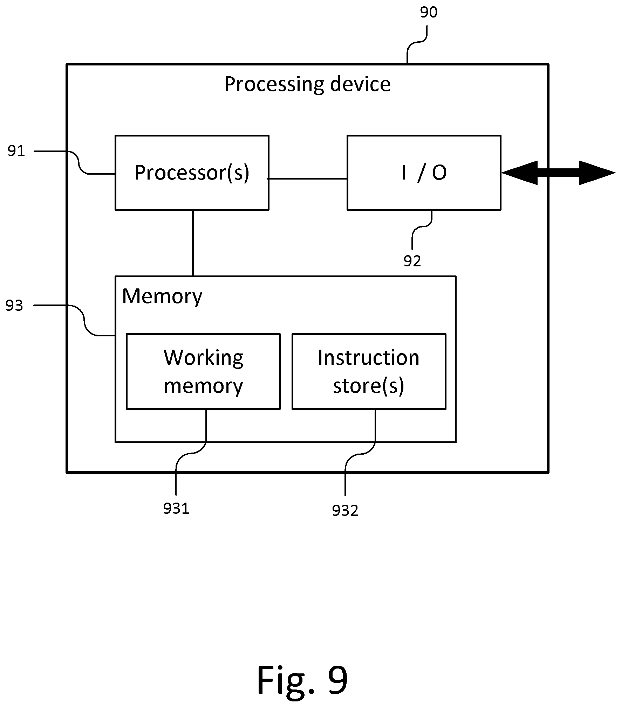

Referring now to Figure 9, an example of a processing device 90, e.g. a general kind of programmable processing apparatus, which may be used to implement the controller 10-2 (at least in part) will be described.

The programmable processing device 90 comprises one or more processors 91, one or more interfaces (or input/output communication modules) 92, and memory 93 comprising one or more working memories 931, and one or more instruction stores 932 storing computer-readable instructions which can be executed by the one or more processors 91 to perform the processing operations as described herein.

An instruction store 932 is a non-transitory storage medium, which may comprise a nonvolatile memory, for example in the form of a read-only-memory (ROM), a flash memory, a magnetic computer storage device (for example a hard disk) or an optical disk, which is preloaded with the computer-readable instructions. Alternatively, an instruction store 932 may comprise writeable memory, such as random access memory (RAM) and the computer-readable instructions can be input thereto from a computer program product, such as a non-transitory computer-readable storage medium (for example an optical disk such as a CD-ROM, DVD-ROM, etc.) or a computer-readable signal carrying the computer-readable instructions. The computer-readable instructions are configured to implement the functionality of components of the controller 10 of Figure 2, the controller 10-2 of Figure 7A, or the controller 10-2' of Figure 7B, for example.

For example, the processor(s) 91 may, executing computer-readable instruction from the instruction store(s) 732, cause the interface(s) 92 to act as the input 110/110-2/110-2' to obtain the analog signal indicative of the measured value, and if received, to obtain the information 61 indicative of the reference value and the information 62 indicative of the reference range.

The processor(s) 91 may process the data to obtain the difference between the measured value and the reference value, to calculate the accumulated value Int_out, to compare the accumulated value to the reference range, and to cause the generation of control signal(s) via the interface(s) 92 (e.g. by cause the interface 92 to generate instruction(s) for controlling the motor drive 20 or for controlling a signal generator coupled to the interface 92).

In some implementations, the interface(s) 92 may comprise a signal generator (e.g. a voltage and/or current signal generator) for receiving power from a power supply and for generating signals to control the motor drive 20 directly (i.e. without being coupled to an external signal generator).

Data related to the control, such as the information for the reference value and/or the reference range, etc., whether received via the interface(s) 92, received from another source, or predefined, may be stored in the memory 93.

### Modifications and Variations

Many modifications and variations can be made to the example embodiments described above.

In particular, in the examples described with reference to the figures above, the controller receives an analog signal based on a measured current on a low-voltage input side of the motor drive 20. However, the present invention is not limited in this regard. It would be understood that any other electrical quantity indicative of the current supplied to the motor (i.e. the current IA, IB and/or IC shown on Figure 1) may be measured instead or in addition thereto. For example, instead of measuring a current on the low-voltage input side of the motor drive 20, a current on the high-voltage input side of the motor drive may be used as the measured value. Alternatively or additionally, the currents flowing through the switching elements corresponding to each phase, indicated as la, Ib and Ic on Figure 1, may be used as the measured value. In other examples, a voltage across an element with a known resistance value and placed in series between the motor drive and the power supply, or between the motor drive and the motor, may be used as a measured value. In yet other examples, a change in a magnetic field near an electrical connection between the power supply 40 and the motor drive 20, or between the motor drive 20 and the motor 30 may be used as the measured value.

As mentioned above, although the examples described with reference to the figures indicate a 3-phased BLDC motor, the motor may be of any other suitable type, and may have any number of phases.

In the example shown on Figure 4, when the Switch S1 changes state to the value at the negative input of the second operational amplifier U2 indicates the lower limit of the reference range it corresponds to the ground voltage. This causes the accumulated value not to decrease significantly below the lower limit of the reference range. However, the present invention is not limited in this aspect. It would be understood that a negative voltage may be indicated instead. On the other hand, the voltage level corresponding to the upper limit of the reference range may correspond to the ground voltage instead, thus ensuring the accumulated value does not exceed significantly the upper limit of the reference range.

In the example shown on Figure 7B, the analog-to-digital converter 170' samples an analog signal I_diff indicative of a difference between the measured value lin and the reference value Ref_value. Instead, an A/D converter may be configured to sample the analog signal lin indicative of the measured value directly. The sampled values may be used to obtain a difference (i.e. a digitized value indicative of the difference) with a reference value, where the reference value may be obtained by the controller 10-2 either as an analog signal that is sampled by the A/D converter, or as a digitized value.

In such case, the controller 10-2 may be implemented by processing means, such as a microcontroller comprising one or more processors and executing a computer program stored on memory, together with an A/D converter to sample the analog signal indicative of the measured value lin, and a digital-to-analog, D/A converter to output analog signals for controlling the supply of current in the motor drive. In other words, the microcontroller (or other processing means) may, when its processor(s) execute the computer program stored on memory, implement the functions of at least one, and preferably all of, the accumulator 120-2', the reference range determinator 131, the second difference calculator 133, the third difference calculator 134, and the combiner 135, and the signal generator 140 may comprise the D/A converter to output signals based on the output of the microcontroller. In such implementation, the microcontroller may control both the reference window and the frequency control allowing the microcontroller to control the target current and monitor if the target is fulfilled.

In an exemplary implementation of the controller 10-2 of Figure 7A, a microcontroller implements the reference range determinator 131 and the comparator 132, combined with the analog part 10-21. In such exemplary implementation, the microcontroller can also determine, based on the sampled integrator signal input by the A/D converter 170, that the output of the analog integrator appears erroneous, for example if the sampled integrator signal remains unchanged, or if the integrated difference increase when the control signal switched state (indicating the integrated difference should start decreasing). If the output of the integrator appears erroneous, the microcontroller may perform corrective measures, for example by switching the state of the output control signal, and/or changing the size of the reference window, by notifying a user of possible malfunction of the integrator and/or by interrupting an operation of the device to avoid risk of damage.

In some cases, the D/A converter may be separate from, but communicatively coupled to, the controller 10-2. The separate D/A converter may be configured to receive a digital signal from the controller 10-2 indicating one of the first value and second value, and generate at least one analog signal for controlling the state of the switching element(s) in the motor drive based on the received digital signal.

In the examples described with reference to Figure 7A and 7B, the size of the reference range is determined based on the amplitude of the reference value Ref_value and a coefficient a > 0. However, the present invention is not limited in that aspect. Instead, the size of the reference window may be on other characteristics of the circuit.

In particular, in a specific example, the size of the reference range WS may be based on the reference value, the coefficient a, the nominal voltage of the motor Vnm and the voltage Vin of the power supply 40. For example, WS may be determined based on the formula a · Ref_value · (Vin - Vnm).

This allows the size of the reference range WS to be adjusted to a slew rate of the integrator.

In other examples, electrical characteristics of the circuit, such as an inductance value at an output of the motor drive, or an inductance value of the motor (for example, an inductance value corresponding to one or more phase windings of the motor, depending on whether the windings are connected in a Wye or Delta connection) may also be used to adjust the size of the reference range.

In yet another example, the size of the reference range may be determined based on only one of the amplitude I of the current and the amplitude V of the voltage, thus simplifying the determination of the size and thus the reference range to be compared to the accumulated value.

In some examples describes above, the size of the reference range is determined based on at least one of the reference value Ref_value, an amplitude I of a current related to the reference value and an amplitude V of a voltage related to the reference value. However, the present invention is not limited in this aspect. Instead, the size of the reference range may be adjusted based on a frequency at which the at least one control signal generated by the signal generator switch between the first value and the second value.

For example, a component of the controller, such as a frequency-based reference range adjustor, may receive the control signal(s) output of the signal generator and estimate a number of times the control signal(s) switched states between the first value and the second value (e.g. by detecting when the control signal(s) switch to indicate the first value, when the control signal(s) switch to indicate the second value, or both, over a predetermined past period), and obtain an estimated frequency.

The frequency-based reference range adjustor may then compare this estimated frequency to a reference frequency, which may be predetermined. If any significant difference between the estimated frequency and the reference frequency is determined, the size of the reference range may be adjusted to reduce the difference. Specifically, if the estimated frequency is higher than the reference frequency, the size of the reference range may be increased, and in case the estimated frequency is lower than the reference frequency, the size of the reference range may be decreased instead. Accordingly, the frequency at which the control signal(s), and therefore the switching elements in the motor drive, swich state, may be controlled.

The estimated frequency at which the at least one control signal switch may also be used to determine a minimum sampling frequency for an A/D converter of the controller (or coupled to the controller), if any. In other words, the A/D converter in/coupled to the controller may be controlled to sample the analog signal (whether this sampled signal indicative of the measured value, the reference value, the difference between the two or the accumulated value) at a frequency that is at least an integer multiple of the estimated frequency.

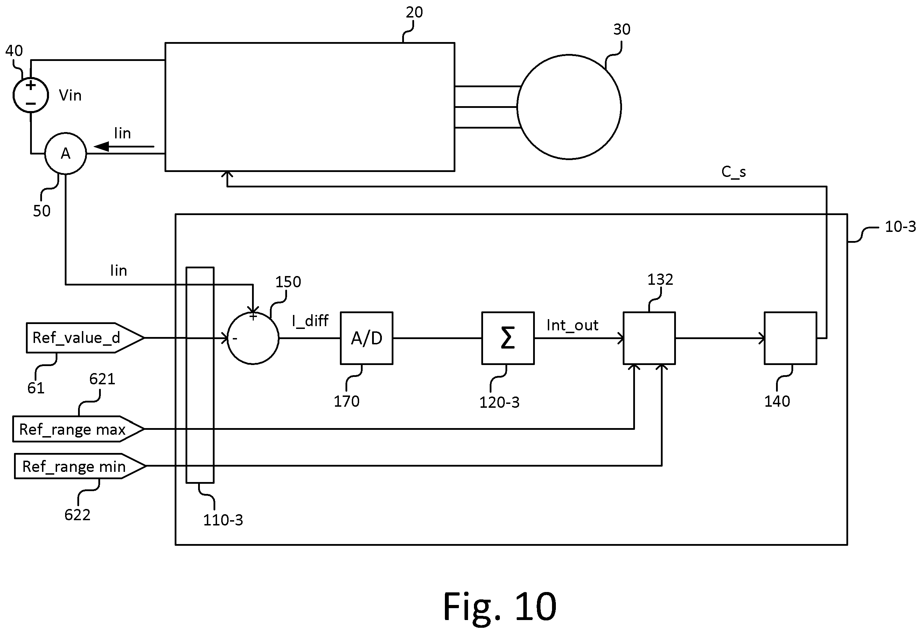

In the examples described with reference to Figure 7A and 7B, a reference range determinator 131 is used to determine the reference range. However, this may be omitted as shown on Figure 10.

Specifically, in the controller 10-3 of Figure 10, the reference range is provided to the controller 10-3, and the input 110-3 of the controller 10-3, in addition to the analog signal lin and the information 61, an information 621 indicating the upper limit of the reference range and an information 622 indicating the lower limit of the reference range.

Various combination of the examples described above can be made. For example, controller 10-2' shown on Figure 7B makes the determination of whether the accumulated value falls within the reference range using the two difference calculators 133, 134 and the combiner 135. In some examples (not shown on the figures), this may replace the comparator 132 shown on Figure 7A or 10. In other examples mentioned herein, the A/D converter 170 and/or 170' may be configured to receive the analog signal lin indicative of the measured value and/or an analog signal 61' indicative of the reference value, and sample these signals to provide digitize values, which are then processed to generate the one or more control signals C_s.

In some examples described above, the reference range is indicated using the lower and upper limits of the reference range, Ref_range min and Ref_range max. However, the present invention is not limited in this aspect. Instead, the reference range could be indicated as a size, which would be implicitly centered around a predetermined value (e.g. 0).

### List of reference signs

10; 10-1; 10-2; 10-3: controller
20: motor drive
30: (electric) motor
40: power supply
50: current sensor
110; 110-2; 110-3: input
120, 120-2, 120-2', 120-3: integrator/accumulator (digital or analog)
130, 132: comparator
140: signal generator
61: information indicative of a reference value
62: information indicative of a reference range
lin: analog signal indicative of the measured value
C_s: control signal(s)
R1, R2, R3, R4, R5, R6: resistors
C1: capacitor
U1: first operational amplifier in an integrator configuration
U2: second operational amplifier in a comparator configuration
S1: switch
Current_reference, Ref_value: reference value
Vref_window: reference range
200: commutation indicator
Q1, Q2, Q3: switching elements corresponding to respective phases
Qc: switching element common to a plurality of phases
Com1, Com2, Com3: commutation signals
Gs1, Gs2, Gs3: signals controlling the switching elements
θm: rotational angle of the motor (e.g. rotor angle)
131: reference range determinator
133, 134, 150: difference calculators
135: combiner
160: digital-to-analog (D/A) converter
170, 170': analog-to-digital (A/D) converter
90: processing device (e.g. microcontroller)
91: processor(s)
92: interface(s)
93: memory
931: working memory
932: instruction store(s)
621: information indicative of an upper limit of the reference range
622: information indicative of a lower limit of the reference range

## Claims

1. A controller for a motor drive configured to receive a supply of current from a power supply to drive an electric motor, preferably in a powered device such as an electric power tool, the controller comprising:
an input configured to obtain an analog signal indicative of a measured value, the measured value being indicative of a current supplied to the electric motor;
an integrator configured to obtain an accumulated value of a difference between the measured value and a reference value over time, wherein the reference value is indicative of a target for the measured value;
a comparator configured to compare the accumulated value with a reference range; and
a signal generator configured to generate at least one control signal, wherein, when the accumulated value is equal to or higher than an upper limit of the reference range, the signal generator is configured to cause the at least one control signal to indicate a first value for interrupting the supply of current, and
when the accumulated value is lower than or equal to a lower limit of the reference range, the signal generator is configured to cause the at least one control signal to indicate a second value for causing a restart in the supply of current.

2. The controller according to claim 1, wherein the comparator is configured to determine the reference range based on the reference value.

3. The controller according to claim 1, wherein the input is configured to receive information indicating the reference range.

4. The controller according to claim 3, wherein the input is configured to receive the information indicating a reference range as a second analog signal, and preferably, the integrator is configured to obtain a third analog signal indicating the difference between the measured value and the reference value.

5. The controller according to any of claim 1 to 4, wherein a size of the reference range is determined based on the reference value.

6. The controller according to claim 5, wherein the controller is configured to determine the size of the reference range based on at least one of: an amplitude of a current related to the reference value and an amplitude of a voltage related to the reference value, preferably the size of the reference range being proportional to the at least one of the amplitude of the current related to the reference value and the amplitude of the voltage related to the reference value.

7. The controller according to claim 6, wherein the controller is configured to determine the size of the reference range based on a formula a · Ref_value · (Vin - Vnm), where a is a real number greater than zero, Ref_value is the amplitude of the current related to the reference value or the voltage related to the reference value, Vin is an amplitude of the voltage supplied by the power supply and Vnm is a nominal voltage of the motor.

8. The controller according to any of claims 1 to 7, wherein the controller is configured to adjust a size of the reference range.

9. The controller according to claim 8, wherein the controller is configured to obtain a switching frequency at which the at least one control signal switches between indicating the first value and indicating the second value, and to adjust the size of the reference range so that the switching frequency matches substantially a reference frequency.

10. The controller according to any of claims 1 to 9, wherein the measured value is the current that is received by the motor drive from the power supply, wherein preferably, the measured value is obtained from a low-voltage side input of the motor drive.

11. The controller according to any of claims 1 to 10, wherein the at least one control signal is for controlling a state of one or more switching elements in the motor drive.

12. The controller according to any of claims 1 to 11, further comprising an analog-to-digital, A/D, converter configured to sample the analog signal or another analog signal that is indicative of the difference between the measured value and the reference value,
wherein the A/D converter is configured to generate a digital signal based on the sampled signal, and the integrator is configured to obtain the accumulated value based on the digital signal.

13. The controller according to any of claims 1 to 11, further comprising an analog-to-digital, A/D, converter configured to sample a signal indicative of the accumulated value that is output by the integrator,
wherein the A/D converter is configured to generate a digital signal based on the sampled signal, and the comparator is configured to compare the digital value with the reference range.

14. The controller according to claim 12 or 13, wherein the A/D converter is configured to sample at a sampling frequency that is at least an integer multiple of a switching frequency at which the switching elements in the motor drive are determined to be switching.

15. The controller according to any of claims 1 to 14, wherein the electric motor comprises a plurality of phases, and wherein the signal generator is configured to output respective at least one control signal for each phase of the electric motor.

16. A motor drive comprising the controller according to any of claims 1 to 15, and a switching circuit comprising at least one switching elements, wherein the output of the switching circuit is connectable to an electric motor,
wherein the motor drive is configured to control a state of the at least one switching elements based on the at least one control signal, to drive the electric motor.

17. A powered device, preferably an electric power tool, comprising the motor drive according to Claim 16 and the power supply.
